# EUROPEAN PATENT SPECIFICATION

(11) **EP 2 068 265 B1**
(45) Date of publication and mention of the grant of the patent: **05.12.2012**
(21) Application number: 09001684.1
(22) Date of filing: 29.09.2005
(51) Int. Cl.: G06K 1/12, G06K 19/07, G06K 17/00

(54) **RFID printer system**
RFID-Drucksystem
Système d'impression RFID

(30) Priority: 29.09.2004 US 953916
(43) Date of publication of application: 10.06.2009
(62) Divisional of application: 05021293.5
(73) Proprietor: Avery Dennison Retail Information Services, LLC, Pasadena CA 91103 (US)
(72) Inventor: Duckett, Jeanne F., Franklin Ohio 45005 (US)
(74) Representative: Katérle, Axel

(56) References cited:
- WO-A-02/35463
- US-A1- 2004 149 826

## Description

### BACKGROUND OF THE INVENTION

### FIELD OF THE INVENTION

The present invention relates to RFID (Radio Frequency Identification) printer systems, methods of printing and record members.

### BRIEF DESCRIPTION OF THE PRIOR ART

The following prior art is made of Record: U.S. Patent 5,833,377; U.S. Patent 6,327,972; U.S. Patent 6,481,907; U.S. Patent 6,677,852; and U.S. patent application 10/222,692, filed August 16, 2002, Publication No. 2004/0032443, published February 19, 2004; and Canadian patent 2,178,773.

RFID (Radio Frequency Identification) transponders have been embedded in record members such as tags, tickets, labels and the like to track inventory. The data contained in the transponder is typically read by a stationary RFID reader as the inventory with the RFID transponder is carried past the stationary reader on a conveyor belt or the like. Similarly, stationary RFID writers are typically used to write data into the RFID transponder. RFID printers are now required to be capable of both printing on record members, such as labels, tags, etc., and capable of writing to and/or reading from a RFID transponder contained on the record member.

U.S. Pat. No. 6,327,972 shows a stationary printer for writing data into a transponder embedded in a label and for printing data on the same label. The printer is connected to a computer via a conductor to receive the data to be printed on the label together with data to be written into the transponder in the label. In another embodiment, a serial number encoded into the RFID transponder in the label is read from the transponder so that the serial number can be printed on the same label.

An International Patent Application bearing International Publication Number WO 03/029005 discloses a thermal transfer printer that selectively inserts one or more RFID transponders in a web with individual media samples on a programmed, on-demand basis. A processor determines whether or not a label that is to be printed is to have a programmed RFID transponder inserted in it. If a RFID transponder is to be inserted, a RFID transponder is programmed and inserted in the label, and the label is printed. If it is determined that a RFID transponder is not to be inserted, a label is printed without inserting a RFID transponder. Using such a single printer to attempt to incorporate selectively RFID transponders in a single web and then to print both RFID and non-RFID record members is a complicated process and may result in unreliability.

Another device for producing both RFID and non-RFID record members is konwn from WO 02/35463 A2.

### BRIEF SUMMARY OF THE INVENTION

An embodiment of the present invention is directed to a pair of associated webs comprising first and second webs of record members. The first web of record members has RFID transponders. The record members of the first web have different data disposed in different sets of record members along the first web. The record members of the second web have the different data disposed in different sets of record members along the second web. At least one record member of each set in the first web has an indicium associating each set in the first web with each related set in the second web.

In certain applications it is desired to use one or more record members in a set with RFID transponders and one or more record members in a set without transponders.

One aspect of the invention is to provide a RFID web of record members wherein there is a RFID transponder in preferably each RFID record member, and also a web free of any RFID transponders in its record members, also referred to herein respectively as a non-RFID web and as non-RFID record members. The webs are normally in roll form, however, fan-folded webs can also be used. In one example, the RFID transponders in the RFID record members in the RFID web can be encoded or written to with data and/or the data can be printed on the RFID record members throughout the web. The non-RFID record members in the non-RFID web can be printed with the related data throughout the web. In order to associate these RFID record members in the RFID web with non-RFID record members printed with the related data, an associating indicium such as a number, a symbol, a graphic or the like or indicia such as a series of numbers or sequences of numbers are printed on both the RFID web and on the non-RFID web. An associating indicium could be printed on only the first record member in the roll or fan-folded web, but if the first record member were removed, the association between the RFID web and the non-RFID web would no longer be visually discernable. Therefore, since all the data on all the record members on the RFID record member and on the non RFID record members is related, the same indicium is preferably printed on all the record members to indicate visually that the RFID record members in the RFID web are associated with the non-RFID record members in the non-RFID web. Thus, these two webs are associated or belong together as a set of record members. It is, therefore, not possible to be mistaken that the data in the RFID and non-RFID record members are related and that the record members and the webs are paired together. There is a one-to-one correspondence of the RFID and non-RFID record members as is visible from this unique indicium.

It is sometimes desired that the RFID record members in the RFID web have their transponders encoded with data and/or have the data printed in batches or sets wherein each set is RFID encoded and/or printed with different data. Therefore, a RFID web can have sets of RFID members disposed along its length, wherein each set is RFID encoded and/or printed with different data. Likewise, the non-RFID record members in the non-RFID web are printed with data in batches or sets related to the batches or sets of RFID record members. In order to associate a first set of RFID record members with a first set of non-RFID record members having the same data, an indicium unique to both first sets is printed on at least one RFID record member and on at least one, and preferably each, non-RFID record member of the first sets. Therefore, the user knows from a quick visual inspection that the RFID record members and the non-RFID record members of those two first sets are associated or paired on a one-to-one basis. It is evident that the number of RFID record members of any set can differ from the number of non-RFID record members of a related set which are paired or associated; the number of RFID record members of any set of RFID record members can differ from other sets of RFID record members; and the number of non-RFID record members of any set of non-RFID record members can differ from other sets of non-RFID record members. A second set of RFID record members in the RFID web can be RFID encoded and/or printed with data different from the first set of RFID members, and a second set of non-RFID record members can be printed with data different from the data of the first set of non-RFID record members, however, the data in the RFID record members of the second set and the data of the non-RFID record members of the second set are related. An indicium unique to both second sets is printed on at least one RFID member and at least one non-RFID member of the second sets. Therefore, the user knows from a quick visual inspection that the RFID record members and the non-RFID record members of these two second sets are associated or paired on a one-to-one basis, and so on for all the sets of the RFID and non-RFID record members in the RFID and non-RFID webs.

Alternatively, a series or sets or series of indicia can be printed on the RFID and non-RFID record members to relate sets of related data.

Following printing of a pair of RFID and non-RFID webs of respectively RFID and non-RFID record members, the RFID and non-RFID record members can be separated from their webs as by delaminating, cutting or manually tearing into individual RFID and non-RFID record members. In that the RFID and non-RFID webs were printed with the same indicium associating or linking RFID and non-RFID record members having related data, it is not possible for the user to confuse which RFID record member relates to which non-RFID record member. In that the RFID and non-RFID webs were printed with the same indicium associating or linking RFID and non-RFID record members having related data, it is not possible for the user to confuse which RFID record member relates to which non-RFID record member. Similarly, the RFID and non-RFID record members can be separated into a connected batches or sets of RFID record members and connected batches or sets of non-RFID record members. In that each batch of connected RFID record members, and each batch of connected non-RFID record members having related data bear at least one unique indicium associating or linking them into pairs on a one to one basis, it is not possible for the user to confuse which batch of RFID record members is associated with or belongs to or is linked with which batch of non-RFID record members of the same pair. In this connection any batch or set of connected RFID record members can have any desired number of RFID record members, for example, one or more. Likewise any batch or set of connected non-RFID record members can have any desired number of non-RFID record members, for example, one or more.

These and other advantage and novel features of the present invention, as well as details of the illustrated embodiments thereof, will be more fully understood from the following description and drawings.

### BRIEF DESCRIPTION OF THE DIAGRAMMATIC DRAWINGS

FIGURE 1 is a block diagram representing a RFID printing system in accordance with one embodiment of the present invention;
FIGURE 2A is a block diagram representing a RFID printer according to an illustrative embodiment, of the present invention;
FIGURED 2B is a block diagram representing a non-RFID printer;
FIGURES 3 is a block diagram of a RFID read/write station in the RFID printer of FIGURE 2;
FIGURE 4A and 4B form a flowchart illustrating a RFID read/write operation and a print operation of the RFID printer of the present invention;
FIGURE 5 is a sectional view of a RFID printer;
FIGURE 6 is a perspective view of a roll of a web of record members, namely, labels containing RFID transponder;
FIGURE 7 is an enlarged sectional view showing components of the printer including an antenna system used to write to and/or read a RFID transponder in a label of a web of labels;
FIGURE 8 is a flowchart representing a method of printing RFID record members according to an illustrative embodiment of the present invention;
FIGURE 9 is a flowchart representing a method of printing RFID record members according to an alternative embodiment of the present invention;
FIGURE 10 illustrates a dual mode printer in accordance with an alternative embodiment of the present invention;
FIGURE 11 is a functional block diagram representing printing system according to an alternative embodiment of the present invention.
FIGURE 12 is a functional diagram representing a RFID printer and a non-RFID printer and their associated output webs according to an illustrative embodiment of the present invention.
FIGURE 13 is a flowchart representing a method of printing associating indicia on record members according to an illustrative embodiment of the present invention

### DETAILED DESCRIPTION OF THE INVENTION

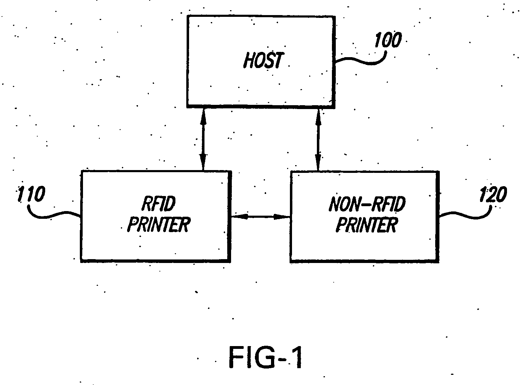

FIGURE 1 is a block diagram representing a system in accordance with one embodiment of the present invention. FIGURE 1 shows a host 100, a Radio Frequency Identification (RFID) printer 110 and a non-RFID printer 120. The host 100 can be a computer mainframe, a personal computer, a workstation, a network server, a barcode scanner/terminal or any other data input device. The RFID printer 110 is illustratively loaded with, and capable of printing to, record members such as, but not limited to, labels, tags, tickets, forms, signs, or like media samples. The record members that are produced by the RFID printers 110 have embedded therein a RFID transponder that is capable of being programmed, via a radio frequency (RF) signal, to store various types of data. Such RFID transponders are known in the art and typically comprise an integrated circuit chip and a radio frequency antenna. The RFID integrated circuit typically includes a read-only memory (ROM) that stores a unique identification number identifying the RFID transponder. The RFID integrated circuit typically also includes a memory or registers that are programmable to store various types of data. Such RFID transponders can be programmed to store any type of information, and are commonly employed to store data relating to a product or a package to which the associated record member is to be affixed, including, but not limited to, information pertaining to the nature of the product or the contents of the package, quantity information, price information, etc. The RFID printer 110 is thus capable of being loaded with a web of record members (for example, a roll of RFID labels) that have RFID transponders embedded thereon. The RFID printer 110 is capable of both printing on said record members and programming, via a RF signal, the RFID transponders.

The non-RFID printer 120 is illustratively a printer that is capable of printing record members, such as, but not limited to, labels, tags, tickets, forms, signs, or like media samples. According to an illustrative embodiment of the present invention, the non-RFID printer 120 is loaded with a web of record members (for example, a roll of labels) that do not have RFID transponders thereon and are, thus, free of RFID transponders.

In an illustrative embodiment of the present invention, the host 100 provides input data to the RFID printer 110. According to an illustrative embodiment, of the present invention, the input data provided to the RFID printer 110 may include data that is intended for a RFID. record member or may alternatively includes data that is intended for a non-RFID record member (that is, a conventional record member that does not have a RFID transponder thereon). Data that is intended for a RFID record member will include data that is to be written to the RFID transponder on an associated record member, and may also include data that is to be printed on the associated record member. Data that is intended for a non-RFID record member will include data that is to be printed on a record member and will not include RFID data to be encoded in a RFID transponder.

According to an illustrative embodiment of the present invention, the RFID printer 110 is capable of determining whether the data provided by the host 100 is intended for a RFID printer or for a non-RFID printer, that is, the RFID printer 110 determines whether the received data includes RFID data or not If the received data does include RAID data, the RFID printer produces a RFID record member according to the received data Thus, the RFID printer 110 will encode a RFID transponder associated with a given record member in the web of record members, and, if the received data further includes data that is to be printed on the associated record member, will print said data on the associated record member. If, on the other hand; the RFID printer 110 determines that the data provided by the host 100 is not intended for a RFID printer (that is, if the received data does not include RFID data), the RFID printer 110 transmits the received data to the non-RFID printer 120. The non-RFID printer 120 then prints the received data on a non RFID record member.

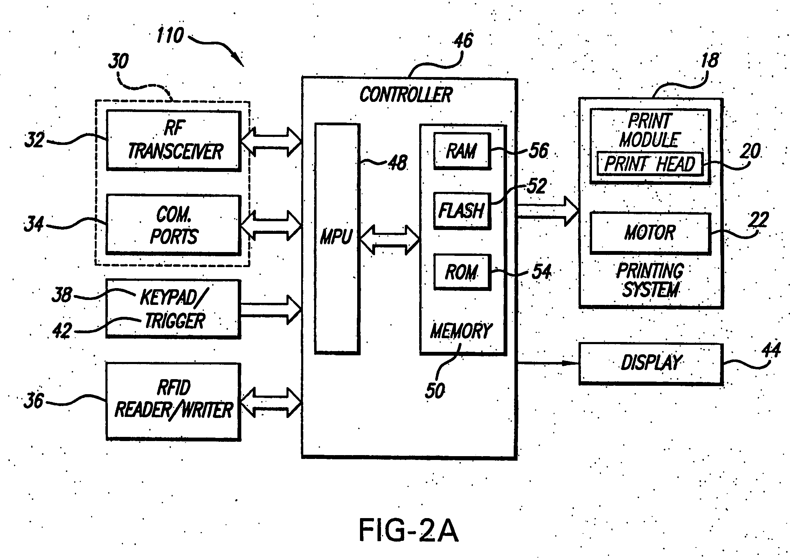

FIGURE 2A is a block diagram representing a RFID printer, such as RID printer 110, according to an illustrative embodiment of the present invention. The RFID printer 110 illustratively includes a printing system 18 with a print head such as a thermal print head 20 or the like. The printing systems 18 also includes a motor 22 that moves a web of record members 24, such as labels, tags, etc., via for example one or more rollers (not shown) past the print head 20 in order to print data thereon. Data printed by the print head 20 can include barcode and/or alpha-numeric information.

In the illustrative embodiment of FIGURE 2A, the RFID printer 110 includes a number of input devices mounted in its housing. These input devices include a communication interface 30 and a keypad 38. In an illustrative embodiment, the communication interface 30 includes a radio frequency transceiver 32 and/or one or more communication ports 34 such as an RS 232 port, a serial port, a parallel port, an 802.11b port, an 802.3 port, a USB port, etc. The communication interface 30 allows the RFID printer 110 to communicate with a host device, such as host 100, to receive data therefrom or to transmit transaction data thereto. The communication interface 30 allows the RFID printed 110 to communicate with the host in real time. Alternatively, the RFID printer 110 may be operated off-line such that the data received from a host is stored in a look-up table or the like in a memory of the printer for later use. Similarly, data can be entered via one or more of the input devices, stored in a memory of the printer and later transmitted with a batch of data records to a host via a communication port 34. In an illustrative embodiment of the present invention, the RFID printer 110 is couplable to non-RFID printer 120 through the communication interlace 30. In various embodiments, the RFID printer 110 can communicate with the non-RFID printer 120 by way of the radio frequency transceiver 32 or one of the communication ports 34. In an illustrative embodiment, if the RFID 110 printer receives print data that is intended for a non-RFID printers, that is, print data that does not include RFID data, the RFID printer 110 forwards such data to the non-RFID printer 120 for printing via the communication interface 30.

The RAID printer 110 includes a RFID reader/writer 36. The RFID reader/writer 36 is capable of reading and/or writing to a RFID transponder on a record member that is driven by the motor 22 of the printer 110. When operating in the read mode, the RFID reader/writer 36 forms one of the data input devices for the RFID printer 110. In a write mode, the RFID reader/writer 36 forms one of the output devices along with the printing system 18 and the communication interface 30 when transmitting or sending data out from the printer 110.

In the illustrative embodiment represented in FIGURE 2A, the RFID printer 110 includes a plurality of keys 38. In an illustrative embodiment, the keys 38 include a keypad with keys and a trigger key 42. The keypad may be utilized to enter alpha-numeric data to the printer 110. Alternatively, the keypad may have only a limited number of keys that are actuable in accordance with information depicted on a display 44 for selecting a number of operations of the printer, for example, feeding a web of record members through the printer 110, displaying status information, etc. The trigger key 42 may be actuable by a user in various modes of the printer 110 to actuate the printing system 18 and/or the RFID reader/writer 36. Alternatively, one or more of these devices can be actuated automatically by a controller 46 of the printer 110 in accordance with a stored application program. In addition to displaying status information or data entered via the keyboard, the display 44 may also be controlled to provide prompts to the user to actuate the trigger key 42 and/or other keys so as to control various operations of the printer 110.

The RFID printer 110 includes a controller 46 that includes a microprocessor 48 and a memory 50. The memory 50 includes non-volatile memory such as flash memory 52 and/or a ROM 54 such as the EEPROM. The memory 50 also includes a RAM 56 for storing and manipulating data. In accordance with a preferred embodiment of the present invention, the microprocessor 48 controls the operations of the printer 110 in accordance with an application program that is stored in the flash memory 52. The microprocessor 48 may operate directly in accordance with the application program. Alternatively, the microprocessor 48 can operate indirectly in accordance with the application program as interpreted by an interpreter program stored in the memory 54 or another area of the flash memory 52.

The microprocessor 48 is operable to select an input device 32, 34, or 38 to receive data therefrom and to manipulate the received data and/or combine it with data received from a different input source in accordance with a stored application program. The microprocessor 48 couples the selected, combined and/or manipulated data to the printing system 18 for printing on a record member. The microprocessor 48 may select the related data to be written to a RFID transponder on a record member. The microprocessor couples the data selected for writing to the RFID reader/writer 36 wherein the data is written in encoded form to the RFID transponder. Similarly, the microprocessor 48 can select the same or different data for storage in a transaction record in the RAM 56 and for uploading via the communication interface 30 to a host 100. The processor 48 is operable to select data to be coupled to the printing system 18 independently of the data that the processor 48 selects to be coupled to the RFID reader/writer 36 to provide a high degree of flexibility.

According to an illustrative embodiment of the present invention, the controller 46 receives data that is to be printed on a record member. This data can be received from any of input devices 30 and 38. In some instances, such received data may include RFID data that is to be encoded to a RFID transponder associated with a record member. In other instances, this data may not include any RFID data, but rather comprises only data that is to be printed on a conventional, non-RFID, record member. According to one embodiment of the present invention, the controller 46 determines whether the received data includes RFID data. In an illustrative embodiment, the input data stream contains markers that indicate whether the input data comprises RFID data and these markers are used by the controller 46 to determine what to do with the input data. If the received data includes RFID data, the controller 46 controls the RFID encoder 36 to encode the received RFID data in a RFID transponder disposed on a record member in the web of record members. If the received data does not include RFID data, the controller transmits the received data to a second printer, such as non-RFID printer 120, for printing, illustratively via communication interface 30.

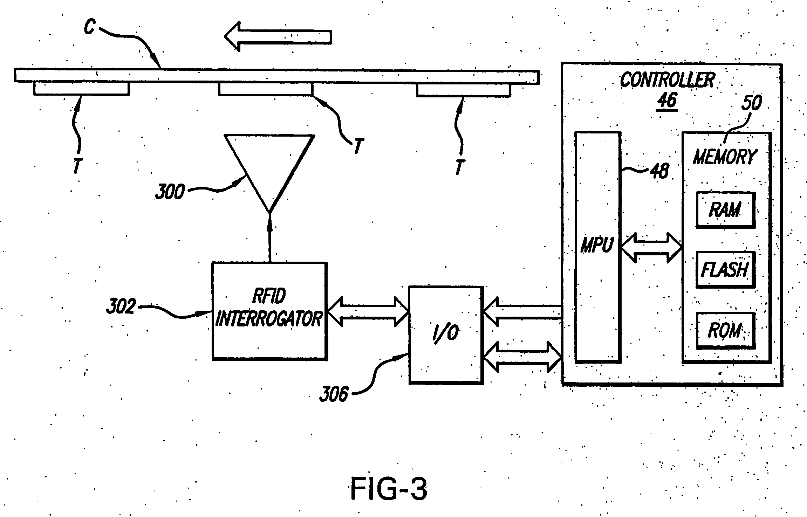

The bock diagram of FIGURE 3 and the flowchart of FIGURED 4A and 4B illustrate the RFID portion of the RFID printer 110. Elements that are common to FIGURES 2A and 3 are given like reference numbers. In an illustrative embodiment of the RFID printer 110, the RFID reader/writer 36 includes a radio frequency antenna 300, a RFID interrogator 302 and an input/output interface 306. The RFID antenna 300 illustratively radiates energy in a narrow bream towards an adjacent RFID transponder T that is aligned with the antenna 300. The RFID antenna 300 radiates energy in response to a RFID module or interrogator 302 in order to write to, or program, the adjacent RFID transponder. The RFID interrogator. 602 is responsive to the controller 46 to drive the antenna 300 to write or program particular information into the adjacent RFID transponder T. The interrogator 302 is also responsive to energy picked up by the antenna 300 from the RFID transponder T to read information stored on the transponders T. The RFID interrogator 302 is coupled to the controller 46 by a RFID input/output interface 306, the interrogator 302 receiving or sending communication signals through the interface 306, and the interrogator 302 receiving power via the interface 306.

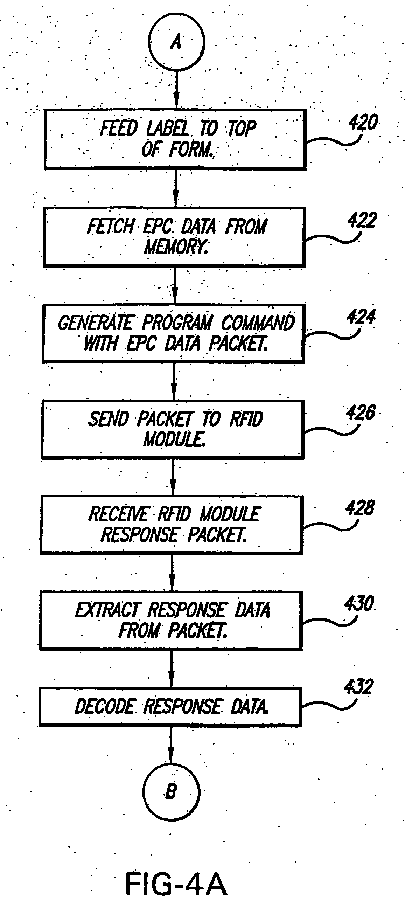

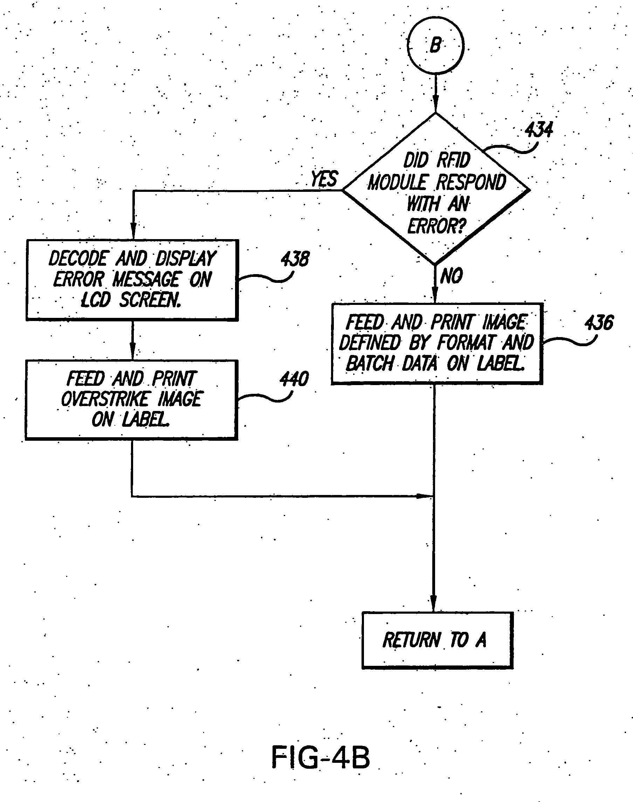

In an exemplary embodiment of the present invention, the microprocessor 48 controls the printing system 18 of the RFID printer 110 to write to and/or read a RFID transponder T in a label and to print on that same label as follows with respect to FIGURES 4A and 4B. At a block 420, the microprocessor 48 controls the printer motor 22 to feed a label to the top of form position at which point the movement of the label web is stopped. At the label top of form position, the RFID transponder T will be generally aligned with the antenna 300. At block 422, the microprocessor 48 retrieves data from the memory 50 that has been sent from the host 100, or otherwise received from one of the data input devices 30 or 38, for writing to the RFID transponder. This data may be for example electronic product code (EPC) information or other data. Thereafter, at block 424, the microprocessor 46 generates a program command. The program command is a packet of control information to be sent to the RFID interrogator or module 302. From block 424, the microprocessor 48 proceeds to block 426 to send the generated packet to the RFID module, i.e. interrogator 602.

It is noted that in a preferred embodiment, the RFID module or interrogator 302 includes its own microprocessor. The RFID module performs a number of functions. For example, the module 302 determines whether a RFID transponder is within its field by reading the RFID transponder's identification code. The RFID module 302 as instructed by the controller 46 erases the data stored in the RFID transponders, verifies the erasure and then programs the RFID data received from the microprocessor 48 into the RFID transponders. The RFID module 302 also verifies that the data has been programmed into the RFID transponder by reading the date stored in the transponder after a programming operation to verify that the data was correctly written into the RFID transponder. Upon completing the verification process, the RFID module 302 generates a response packet that is transmitted back to the microprocessor 48.

Referring again to FIGURES 4A and 4B, the microprocessor 48, at block 428, receives the response packet from the RFID module 302, and at block 630, the microprocessor 48 extracts data from the response packet. The data in the response packet may include a code representing the successful programming of the RFID transponder or the data may include a code representing a particular error. For example, the response data may include an error code indicating that the RFID module could not read a RFID tag, or a code indicating that the tag could not be erased or a code indicating that the tag was not accurately programmed. At block 432, the microprocessor 48 decodes the data in the response packet to determine at block 434 whether the programming of the RFID transponder was successful or whether the response packet from the RFID module included an error code. If the programming of the RFID transponder was determined to be successful, that is, without error, at block 434, the microprocessor 48 proceeds to block 436 to control the feeding or movement of the web and the printing of data on the label via the print head. It is noted that, in an illustrative embodiment, while the RFID transponder is being read from or programmed, the web is stationary. However, during the printing of information on a record member at block 436, the microprocessor 608 moves the web past the print head: If the microprocessor 48 determines at block 434 that the response packet received from the RFID module indicated an error condition, the microprocessor 48 proceeds to block 438 to display an error message on the display 44 of the printer 110. From block 438, the microprocessor proceeds to block 440 to feed the label with the defective RFID transponder past the print head and controls the print head to print an overstrike image, such as evenly spaced longitudinally extending bars, on the record member RM. This indicates that the RFID transponder is defective. From blocks 438 or 440, the microprocessor proceeds to block 408 to feed the next label to the top of form position at block 420 as discussed above.

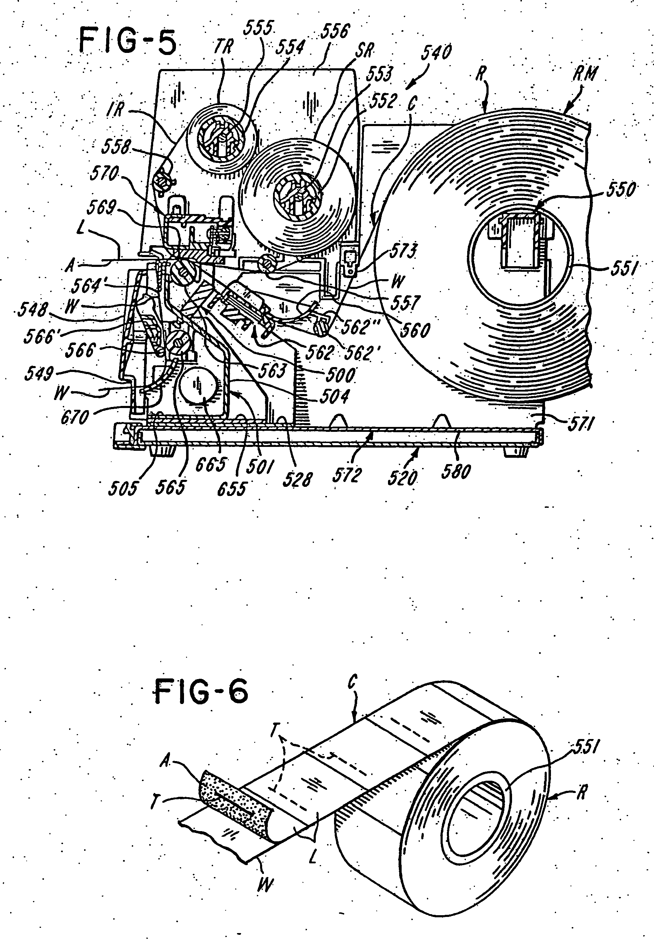

FIGURE 5 shows a RFID printer, generally indicated at 540, in accordance with an illustrative embodiment of the present invention. The printer 540 can be essentially the same as the RFID printer disclosed in U.S. patent application 10/873,979 the disclosure of which is incorporated herein by reference, except as otherwise disclosed herein. It is noted that application 10/873,979 incorporates the disclosure of U.S. Patent 5,838,377.

While the invention is illustrated in connection with a thermal printer using dot heating elements to create images such as bar codes, graphics, alpha numeric characters and the like, the invention is also useful with printers such as ink jet, laser, xerographic, impact, and other types of printers.

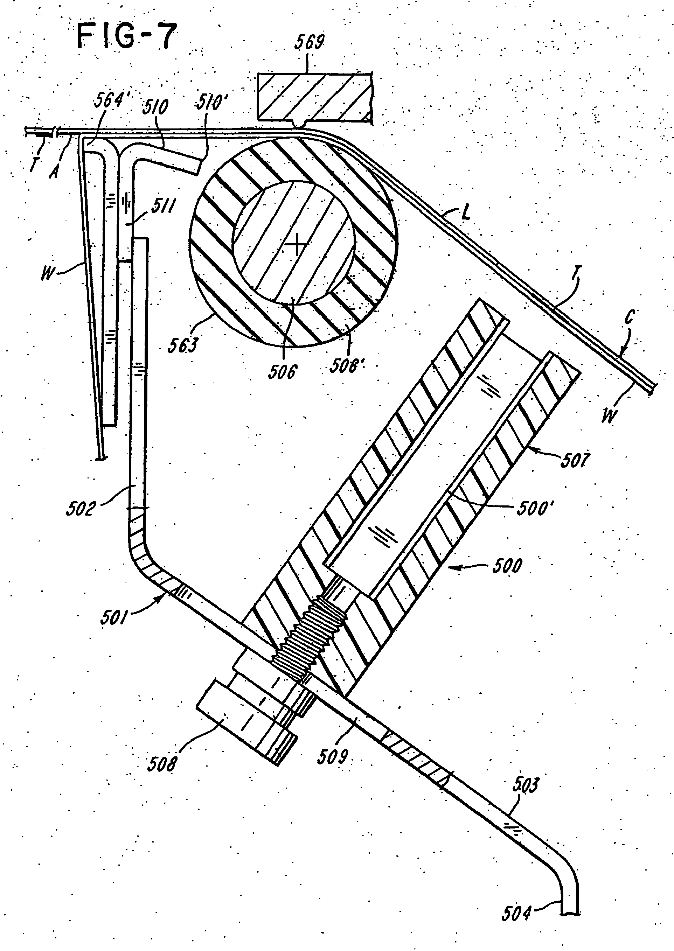

The printer 540 which corresponds to the printer 40 in patent application 10/873,979, has a generally vertical frame panel 571 and a conductive metal horizontal frame member 572 on a conductive metal base plate 520. A movable mounting member 556 is pivotally mounted to the frame plate 571 about hinge blocks 573 (only one of which is shown in FIGURE 5). A roll mounting member 550 is shown to mount a roll R of a web C of record members RM. The record members RM are illustrated to comprise a composite label web C which comprises a longitudinally extending carrier web W to which a series of pressure sensitive labels L are releasably adhered by pressure sensitive, tacky, adhesive A (FIGURES 5 and 6). If desired, the web of record members RM can be comprised of a web of tags or forms. The web C is shown to be paid out of the roll R and passes beneath a guide roller 562' rotatably mounted by a bracket 562" to a guide member 560 which is part of a web guide generally indicated at 562. Any suitable web guide, for example, just a member with a curved surface or a roller can be used instead, if desired. From there the web C passes between a thermal print head 569 which is part of a print head assembly 570 and a platen roll 563. It is noted the web C extends from the roll R to a position upstream of the nip of the print head 569 and the platen roll 563 and extends downstream beyond the nip. The platen roll 563 is shown to have a conductive metal shaft 506 about which a tubular elastomeric sleeve 506' is received as shown in FIGURE 7 for example. The shaft 506 acts as a RF reflector. If desired, the shaft 506 can be made of a rigid plastics maternal which is not RF reflective. A delaminator in the form of a peel bar 564' is provided downstream and preferably adjacent the nip. However, the delaminator can alternatively comprise a peel roller. A label L can be delaminated at the delaminator 564' when the web W is advanced by a motor 665 between a motor-driven roll 565 and a back-up roll 566. A spring 566' is used to urge the backup roll 566 toward the roll 565 so that the web W is pressed between the rolls 565 and 566. From there the carrier web W passes about an arcuate guide plate 670 and through an exit opening 549 of a movable panel 548.

The illustrated printer 540 utilizes an ink ribbon IR wound into a supply roll SR. The supply roll SR has a core 552 and the core 552 is mounted on a spindle 553. The ink ribbon IR is paid out of the supply roll SR and passes beneath a ribbon guide 557 to the nip between the print head 569 and the platen roll 563 and from there the ink ribbon IR passes partially, about a guide 558 and onto a take-up roll TR. The take-up roll TR has a core 554 identical to the core 552. The core 554 is mounted on a spindle 555 identical to the spindle 553. Except for the delaminator 564', the rolls 562' and the bracket 562" the foregoing describes the printer 540 disclosed in U.S. patent 5,833,377.

With continued reference to FIGURE 5, each of the record members R includes a RFID transponder T incorporated in a composite web C of labels L as best shown in FIGURE 6. A typical transponder includes an integrated circuit chip and an antenna. As shown in FIGURE 6, the roll R includes RFID labels L. Each label L is illustrated to have a RFID transponder T adhered to the adhesive A on the underside of the label L. Thus, the composite label web C has a RFID transponder T sandwiched between the label L and the carrier web W. The RFID transponder T. in a preferred embodiment is a passive transponder that uses received RF energy to power the chip of the transponder T and enabling functions of reading and/or writing when sufficient energy is received by the transponder T so that information can be read or written to, i.e., programmed into, the RFID transponder. The pitch of the transponders T is considered the distance from the centerline of one transponder to the centerline of an immediately adjacent transponder. The pitch or length of a record member, RM is the distance from the leading edge of one record member RM to the leading of an adjacent record member RM in the longitudinal direction of the web.

FIGURE 5 also shows an antenna assembly 500 fitted between the web guide 562 and the platen roll 563. A shield or RF reflector generally indicated at 501 extends into contact with an electrically conductive metal delaminator in the form of a peel edge 564' which forms part of the shield. The shield 501, which is preferably comprised of conductive metal such as steel, has an inclined portion 503 (FIGURE 7), a downwardly extending portion 502 joined to the inclined portion 503, a downwardly extending portion 504 and a base portion 505 grounded to the frame 520. The motor 665 is below the inclined portion and above the base portion 505. The platen roll 563 is above the inclined portion 503. The incline portion 503 of the shield 501, in one preferred embodiment, supports the antenna assembly 500 so that a plane of antenna 500' is perpendicular to a RFID transponder T adjacent the antenna 500'. The second portion 502 of the shield 501 extends at an angle from the support portion 503 and towards the web C so that a part of the shield 501 is adjacent the web C to shield a RFID transponder in an adjacent record member RM that is downstream of the shield 501, i.e., a record member RM that is past the shield 501 in the direction of web movement, from energy radiated from the antenna 500'. The second portion 502 of the shield 501 is formed integrally with the portion 503 supporting the antenna 500'. Alternatively, the second shield portion 502 may include multiple parts. For example, as best shown in FIGURE 7, the portion of the shield 501adjacent to the web includes an electrically conductive metal web guide 510 with a downwardly extending portion 511 that abuts and makes intimate electrical contact with shield portion 502. The portion of the shield 501 adjacent the web C may also include the delaminator 564' as discussed below.

With reference to FIGURE 7, the platen roll 563 is shown to have la conductive steel shaft 506 which reflects radiation from the antennas assembly 500. The antenna assembly 500 includes a nonconducting bracket or holder 507 which is secured to the shield portion 503 by two thumb screws 508 (only one of which is shown) threaded into the holder 507. The screws 508 pass through laterally spaced elongate slots 509 in the inclined shield portion 503. The slots 509 allow the position of the antenna assembly 500 to be adjusted The slope of the inclined shield portion 503 is parallel to the path of the web C at the read and/or write station where a transponder T is read and/or written to. Movement of the antenna assembly 500 allows optimal alignment of the antenna 500' with RFID transponders T on the composite web C. The delaminator 64' arid the guide form part of the shield 501.

The shelf or web guide 510 has a downwardly extending portion 511 which is welded to the delaminator 564'. The delaminator 564' and the guide 510 are preferably composed of steel. The shield 501, the delaminator 564' and the guide 510, provide effective shielding of the energy radiated from the antenna assembly 500 and from a RFID transponder which is downstream of the shield 501, the guide 510 and the delaminator 564'. As shown in FIGURE 7, one of the RFID transponders T is spaced from but is adjacent to the antenna assembly 500. Therefore, the antenna 500' does not affect the RFID transponder T which is beyond the delaminator 564'. FIGURE 7 shows the antenna assembly 500 to be located at a write and/or read station.

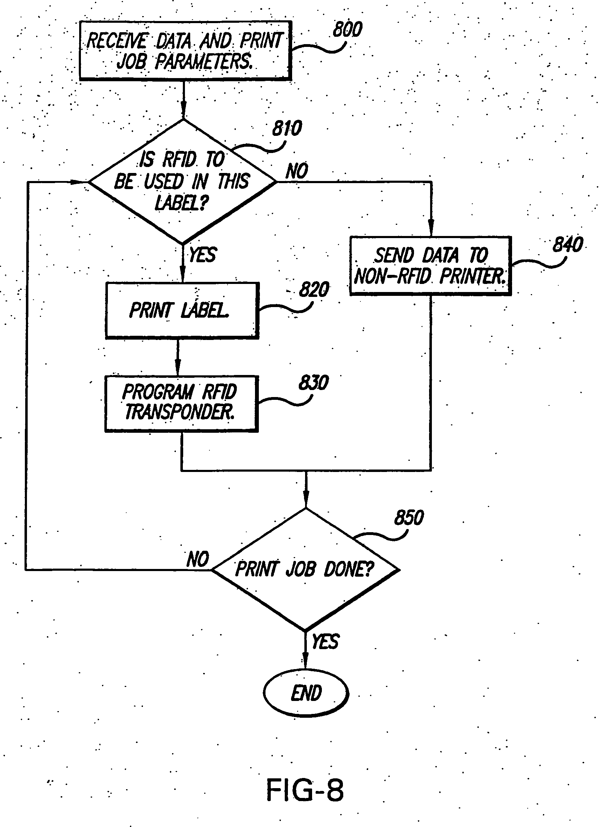

FIG. 8 is a flowchart representing a method of printing RFID record members according to an illustrative embodiment of the present invention. At step 800, print data and associated print job parameters are received at a printer, such as RFID printer 110, capable of printing labels that have RFID transponders embedded thereon and capable of programming said RFID transponder. Illustratively, such data is received via input devices such as communication interface 30 or keypad 38. At step 810, it is determined whether the received data includes RFID data that is to be programmed into a RFID transponder embedded on a record member. This step is illustratively performed by the controller 46, and in particular, by the microprocessor 48. If the received data is intended for a RFID printer, the RFID printers prints the label (step 820) and programs the RFID transponder (step 830). If the received data does not include RFID data, the RFID printer transmits the data to a second printer, such as non-RFID printer 120, that is configured to print non-RFID record members, that is, record members that do not have a RFID transponder embedded thereon, which printer then proceeds to print the non-RFID record label, as shown by step 840. After the received data is printed on a record member, whether by RFID printer 110 at steps 820 and 830 or by non-RFID printer 120 at step 840, the RFID printer 110 determines whether the print job is done at step 850. If the print job is done, the process is complete. If the print job is not done, then the controller 46 executes instructions to loop to step 810 to process the received data intended for the next record member.

Referring again to FIGURES 1 and 2A, the host 100, or one of input devices 30 and 38, provides input data to the non-RFID printer 120. This input data provided to the non-RFID printer 120 may includes data that is intended for a RFID record member or may instead include data that is intended for a non-RFID record member (that is, a conventional record member that does not have a RFID transponder embedded thereon). Data that is intended for a RFID record member will include data that is to be encoded to the RFID transponder embedded in an associated record member, and may also include data that is to be printed on the associated record members. Data that is intended for a non-RFID record member will includes data that is to be printed on a record member and will not include RFID data to be encoded in a RFID transponder.

According to this alternative embodiment of the present invention, the non-RFID printer 120 is capable of determining whether the data provided by the host 100 is intended for a RFID printer or for a non-RFID printer, that is, words, the non-RFID printer 120 determines whether the received data includes RFID data or not. If the received data does include RFID data, the non-RFID printer 120 transmits the received data to the RFID printer 110. The RFID printer 110 then produces a RFID record member according to the received data. Thus, the RFID printer 110 will encode a RFID transponder associated with a given record member in the web of record members, and, if the received data further includes data that is to be printed on the associated record member, will print said data on the associated record member. If, on the other hand, the non-RFID printer 110 determines that the data provided by the host 100 is not intended for a RFID printer (that is, if the received data does not include RFID data), the non-RFID printer 120 then prints the received data on a non-RFID record member.

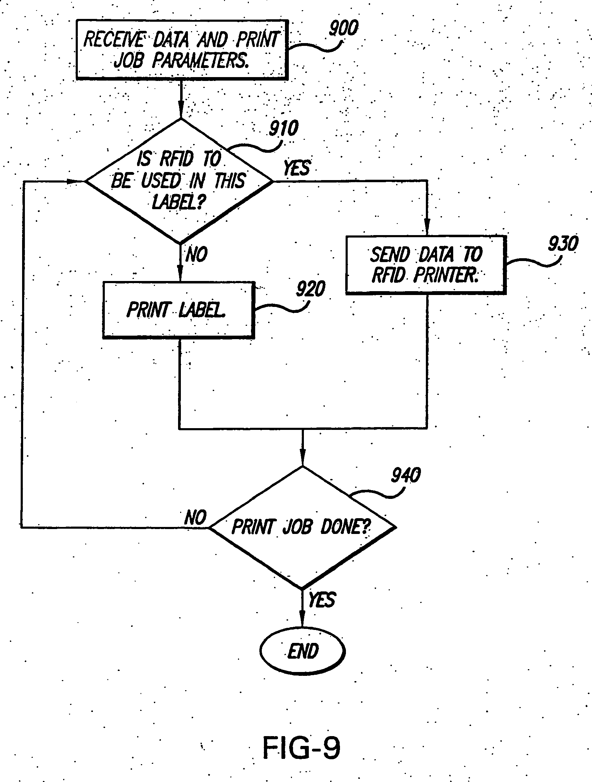

FIGURE 9 is a flowchart representing a method of printing RFID record members according to this alternative embodiment of the present invention. At step 900, print data and associated print job parameters are received at a printer, such as non-RFID printer 110, configured to print record members that do not have RFID transponders embedded thereon. Illustratively, such data is received via input devices such as a communication interface 30 or keypad 38. At step 910, it is determined whether the received data includes RFID data that is to be programmed into a RFID transponder embedded on a record member. This step is illustratively performed by the controller 46, and in particular, by the microprocessor 48. If the received data is not intended for a RFID printer, the non-RFID printer prints the label at step 920. If the received data does include RFID data, the non-RFID printer transmits the data to a second printer, such as RFID printer 110, that is configured to print RFID record members and to program the RFID transponder embedded thereon, which printer then proceeds to print the RFID record label and encode the associated RFID transponder, as shown at step 930. After the received data is printed on a record member, whether by non-RFID printer 120 at step 920 or by RFID printer 110 at step 930, the non-RFID printer 120 determines whether the print job is done at step 940. If the print job is done, the process is complete. If the print job is not done, then the controller 46 executes instructions to loop to step 910 to process the received data intended for the next record member.

Referring again to FIGURES 1 and 2A, in another embodiment of the present invention, either of the RFID printer 110 and the non-RFID 120 can receive input data from the host 100, or one of input devices 30 and 38. This input data provided to the non-RFID printer 120 may include data that is intended for a RFID record member or may instead include data that is intended for a non-RFID record member (that is, a conventional record member that does not have a RFID transponder embedded thereon). Data that is intended for a RFID record member will include data that is to be encoded to the RFID transponder embedded in an associated record member, and may also include data that is to be printed on the associated record member. Data that is intended for a non-RFID record member will include data that is to be printed on a record member and will not include RFID data to be encoded in a RFID transponder.

According to this embodiment of the present invention, both the RFID printer 110 and the non-RFID printer 120 are capable of determining whether the data provided by the host 100 is intended for a RFID printer or for a non-RFID printer. The printer that receives the input data determines whether the received data includes RFID data or not. If the non-RFID printer 120 receives input data, it determines whether or not the received data includes RFID data. If the received data does include RFID data, the non-RFID printer 120 transmits the received data to the RFID printer 110. The RFID printer 110 then produces a RFID record member according to the received data. Thus, the RFID printer 110 will encode a RFID transponder associated with a given record member in the web of records members, and, if the received data further includes data that is to be printed on the associated record member, will print said data on the associated record member. If, on the other hand, the non-RFID printer 110 determines that the data provided by the host 100 is not intended for a RFID printer (that is, if the received data does not include RFID data), the non-RFID printer 120 then prints the received data on a non-RFID record member.

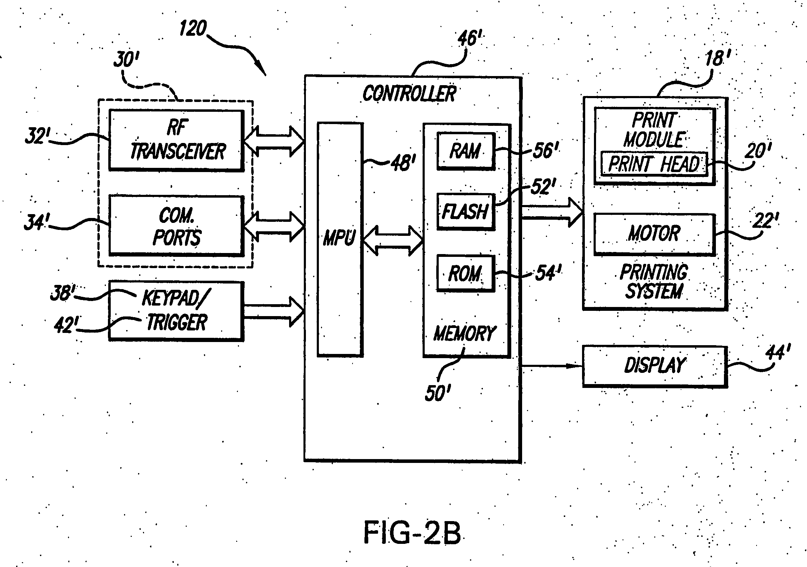

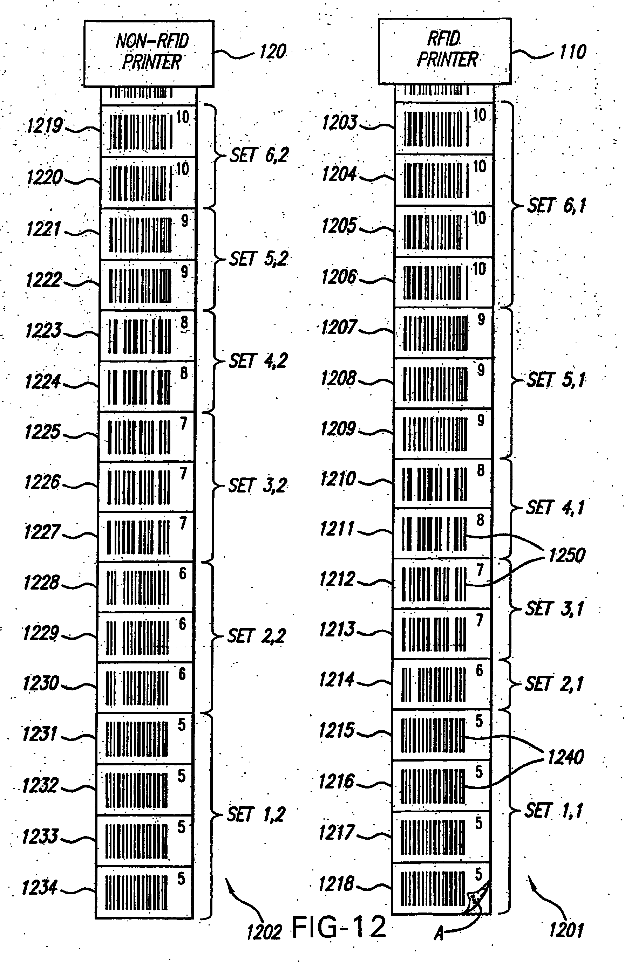

FIGURE 2B is a block diagram representing a non-RFID printer, such as non-RFID printer 120, according to an illustrative embodiment of the present invention. A typical non-RFID printer usable in and with the present invention is essentially as disclosed in U.S. patent 5,833,377, except as noted herein, the disclosure of which is incorporated by reference. The non-RFID printer 120 illustratively includes a printing system 18' with a print head such as a thermal print head 20' or the like. The printing system 18' also includes a motor 22' that drives a web of record members 1202 (FIGURE 12) such as labels, tags, packing slips, etc., via one or more rollers (not shown) past the print head 20' in order to print data thereon. Data printed by the print head 20' can include barcode and/or alpha-numeric information.

In the illustrative, embodiment of FIGURE 2B, the non-RFID printer 120 includes a number of input devices mounted in its housing. These input devices include a communication interface 30' and a keypad 38'. In an illustrative embodiment, the communication interface 30' includes a radio frequency transceiver 32' and/or one or more communication ports 34' such as an RS 232 port, a serial port, a parallel port, an 802.11b port, an 802.3 port, a USB port, etc. The communication interface 30' allows the non-RFID printer 120 to communicate with a host device, such as host 100, to receive data therefrom or to transmit transaction data thereto. The communication interface 30' allows the non-RFID printer 120 to communicate with the host in real time. Alternatively, the non-RFID printer 120 may be operated off-line such that the data received from a host is stored in a look-up table or the like in a memory of the printer for later use. Similarly, data can be entered via one or more of the input devices, stored in a memory of the printer and later transmitted with a batch of data records to a host via a communication port 34'. In an illustrative embodiment of the present invention, the non-RFID printer 120 is couplable to RFID printer 110 through the communication interface 30'. In various embodiments, the non-RFID printer 120 can communicate with the RFID printer 110 by way of the radio frequency transceiver 32' or one of the communication ports 34'. In an illustrative embodiment, if the non-RFID printer 120 receives print data that is intended for a RFID printer, that is, print data that includes RFID data, the non-RFID printer 120 forwards such data to the RFID printer 110 for printing via the communication interface 30'.

In the illustrative embodiment represented in FIGURE 2B, the non-RFID printer 120 includes a plurality of keys 38'. In an illustrative embodiment, the keys 38' include a keypad and a trigger key. The keypad may be utilized to enter alpha-numeric data to the printer 120. Alternatively, the keypad may have only a limited number of keys that are actuable in accordance with information depicted on a display 44' for selecting a number of operations of the printer, for example, feeding a web of record members through the printer 120, displaying status information, etc. The trigger key may be actuable by a user in various modes of the printer 120 to actuate the printing system 18'. Alternatively, one or more of these devices can be actuated automatically by a controller 46' of the printer 120 in accordance with a stored application program. In addition to displaying status information or data entered via the keyboard; the display 44' may also be controlled to provide prompts to the user to actuate the trigger key and/or other keys so as to control various operations of the printer 120.

The non-RFID printer 120 includes a controller 46' that includes a microprocessor 48' and a memory 50'. The memory 50' includes non-volatile memory such as flash memory 52' and/or a ROM 54' such as the EEPROM. The memory 50' also includes a RAM 56' for storing and manipulating data. In accordance with a preferred embodiment of the present invention, the microprocessor 48' controls the operations of the non-RFID printer 120 in accordance with an application program that is stored in the flash memory 52'. The microprocessor 48' may operate directly in accordance with the application program. Alternatively, the microprocessor 48' can operate indirectly in accordance with the application program as interpreted by an interpreter program stored in the memory 54' or another area of the flash memory 52'.

The microprocessor 48' is operable to select an input device 32', 34' or 38', to receive data therefrom and to manipulate the received data and/or combine it with data received from a different input source in accordance with a stored application program. The microprocessor 48' couples the selected, combined and/or manipulated data to the printing system 18' for printing on a record member. Similarly, the microprocessor 48' can select the same or different data for storage in a transaction record in the RAM 56' and for uploading via the communication interface 30' to a host 100.

According to an illustrative embodiment of the present invention, the controller 46' receives data that is to be printed on a record member. This data can be received from either of input devices 30' and 38'. In some instances, such received data may include RFID data that is to be encoded to a RFID transponder associated with a record member. In other instances, this data may not include any RFID data, but rather comprise only data that is to be printed on a conventional non-RFID record member. According to one embodiment of the present invention, the controller 46' determines whether the received data includes RFID data. In an illustrative embodiment, the input data stream contains markers that indicate whether the input data comprises RFID data and these markers are used by the controller 46' to determine what to do with the input data. If the received data includes RFID data, the controller 46' transmits the received data to a second printer, such as RFID printer 110, for printing, illustratively via communication interface 30'. If the received data does not include RFID data, the controller 46' controls the printing system 18' to print the data on a record member in the web of record members.

In this embodiment, of the present invention, if the RFID printer 110 receives input data, it determines whether or not the received data includes RFID data. If the received data does not include RFID data, the RFID printer 110 transmits the received data to the non-RFID printer 120. The non-RFID printer 120 then prints the received data on a non-RFID record member. If, on the other hand, the RFID printer 110 determines that the data provided by the host 100 is intended for a RFID printer (that is, if the received data includes RFID data), the RFID printer 110 then produces a RFID record member according to the received data. Thus, the RFID printers 110 will encode a RFID transponder associate with a given records member in the web of record members, and, if the received data further includes data that is to be printed on the associated record member, will print said data on the associated record member.

In another embodiment of the present invention, a system analogous to the system of FIGURE 1 is implemented with one printer instead of two. In this alternative embodiment, the printer is a dual mode RFID printer that is illustratively configured in the same way as the RFID printer shown in FIGURE 2A, except for the fact that the printer is capable of holding two separate webs of record members. One of the webs comprise record members that have RFID transponders embedded thereon and another web comprises "conventional" record members that do not have RFID transponders embedded thereon. The printer includes a RFID reader/writer that is capable of encoding the RFID transponders disposed on the web that comprises RFID record members. In this alternative embodiment of the present invention, the host 100, or one of the input devices 30 or 38, provides input data to the dual mode printer. The input data provided to the dual mode printer may include data that is intended for a RFID record member or may alternatively include data that is intended for a non-RFID record member (that is, a conventional record member that does not have a RFID transponder thereon). Data that is intended for a RFID record member will include data that is to be encoded to the RFID transponder in an associated record member, and may also include data that is to be printed on the associated record member. Data that is intended for a non-RFID record member will include data that is to be printed on a record member and will not include RFID data to be encoded in a RFID transponder.

According to this embodiment of the present invention, the dual mode printer is capable of determining whether the data provided by the host 100 is intended for a RFID record members or for a non-RFID records member. In other words, the dual mode printer determines whether the received data includes RFID data or not. If the received data does include RFID data, the dual mode printer processes the job employing the web contained therein which comprises RFID record members, thereby producing a RFID record member according to the received data. Thus, the dual mode printer will encode a RFID transponder associated with a given record member in the web of RFID record members, and, if the received data further includes data that is to be printed on the associated record member, will print said data on the associated RFID record member. If, on the other hand, the dual mode printer determines that the data provided by the host 100 is not intended for a RFID record member (that is, if the received data does not include RFID data), the dual mode printer prints the received data on a non-RFID record member contained in the web of non-RFID record members.

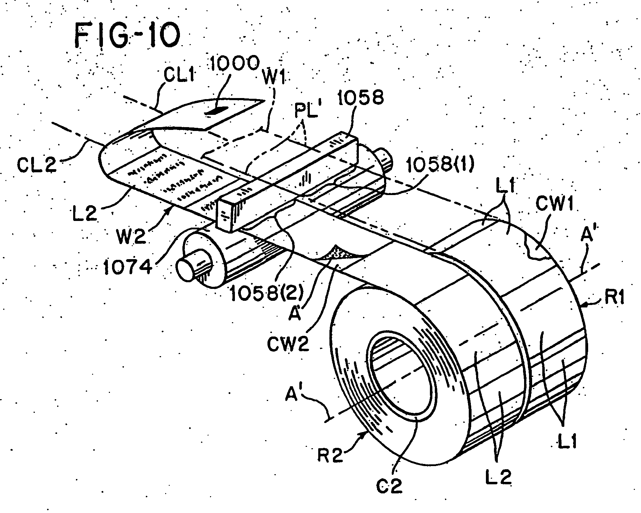

FIGURE 10 illustrates a printer with a pair of rolls R1 and R2 of respective composite label webs W1 and W2, according to an exemplary embodiment of a dual mode printer of the present invention. In the embodiment shown in FIG. 10, the rolls R1 and R2 have respective cores, with core C2 being visible in FIGURE 10. In an alternative embodiment, coreless rolls can be used. The web W1 has labels L1 releasably adhered by pressure sensitive adhesive to a flexible, carrier web CW1, and the web W2 has labels L2 releasably adhered by pressure sensitive adhesive A to a flexible carrier web CW2. The webs W1 and W2 of rolls R1 and R2 are identical except that one of the webs comprises RFID record members, each record member having a RFID transponder disposed thereon, while the other web comprises "conventional," non-RFID, record members. For example, the labels L1 can be RFID labels and the labels L2 can be non-RFID labels. FIGURE 10 illustrates the label web W2 as being threaded along a path having a center line CL2 from the roll .R2 to between a print head 1058 and a platen roll 1074. The print head 1058 is illustrated to be a thermal print head having a straight lint of individual or dot heating elements, however, other types of print heads can be used instead. The print head 1058 is shown to be elongate and essentially fixed in place or stationary except the print head 1058 is resiliently mounted with respect to the platen roll 1074. The web W1 is shown extending outwardly away from the roll R1 by the phantom lines PL' because only one web W1 or W2 at a time is threaded to pass between the print head 1058 and the platen roll 1074. Thus, if the web W1 were threaded to pass along a path as shown in FIGURE 1 by phantom lines PL', the web W2 would remain on the roll R2 and would not be threaded between the print head 1058 and the platen roll 1074. The centerline of the path for the web W1is shown to be CL1. The centerlines CL1 and CL2 pass through longitudinally spaced registration marks 1000 on the webs W1 and W2, there being one registration mark 1000 per label. The web W2 is shown in FIGURE 10 with a U-shaped bend to expose the registration marks 1000. The rolls R1 and R2 are preferably disposed in side-by-side relationship as shown, and also the rolls R1 and R2 are preferably disposed on a common axis A1, although other relationships and dispositions can be used. The webs W1 and W2 and their center lines C1 and CL2 are shown to be parallel. The webs W1 and W2 can move longitudinally in label paths that extend between the elongate transversely extending print head 1058 and the platen roll 1074. The web W1 would be printed by only that portion 1058(1) of the print head 1058 which lies along the label web path of the label web W1, and likewise the web W2 would be printed by only that portion 1058(2) of the print head 1058 which lies along the label path of the label webs W2. The printer of FIGURE 10 has a RFID system as disclosed in FIGURE 3 for reading from or witing to a transponder T in the web W1, but in other respects, the printer is the same as disclosed in U.S. Patent Application Serial No. 10/640,071, filed August 13, 2003, except as noted herein.

In an illustrative embodiment of the present invention, in order to sequence the RFID supply to the non-RFID supply, the printer that receives the data to be printed and/or encoded to RFID transponders coordinates the printing of the RFID record members and the non-RFID record members is further operable to coordinate the printing such that identifying indicia such as sequential numbers are printed to both the printed RFID record members and the printed non-RFID record members. Thus in the illustrative embodiment, such as in FIGURE 8, whereby the RFID printer receives the data to be printed and either prints the data on RFID record members or transmits the data to non-RFID printer 120, the controller 46 of the RFID printer 110 is operable to control the print head 20 of the RFID printer 110, and to provide instructions to the non-RFID printer 120, such that for example sequential numbers are printed on record members by the print head 20 of the RFID printer 110 and by the non-RFID printer 120 in a sequence corresponding to a sequence that data to be printed is received by the controller 46. In the illustrative embodiment, such as in FIGURE 9, whereby the non-RFID printer 120 receives the data to be printed and either prints the data on non-RFID record members or transmits the data to RFID printer 110, the controller 46 of the non-RFID printer 120 is operable to control the print head 20 of the non-RFID printer 120, and to provide instructions to the RFID printer 110, such that sequential numbers are printed on record members by the print head 20 and by the RID printer 110 in a sequence corresponding to a sequence that data to be printed is received by the controller 46. In the dual mode printer embodiment, whereby the dual mode printer receives the data to be printed and prints the data on either RFID record members or non-RFID record members contained within the dual mode sprinter, the controller 46 of the dual mode printer is operable to control the print head 20 such that sequential numbers are printed on both. RFID and non-RFID record members in a sequence corresponding to the sequence that data to be printed is received by the controller 46.

printing of both the data and the associating indicia are preferably done at the same time, namely, the data are printed on the RFID record members of the RFID web while the web is advancing, and data are printed on the non-RFID record members of the non-RFID web while the web is advancing. Even if a printer is used in which the RFID web and/or the non-RFID web are stationary during printing, the data and the associating indicia are nevertheless preferably printed at the same time or substantially simultaneously or simultaneously. It is not required that the RFID printer and the non-RFID printer print at the same time. Recitation of a step for printing data and a step for printing associating indicia in any claim is not intended to limit the invention to the interpretation that the printing of data and associating indicia are performed separately or are separate steps.

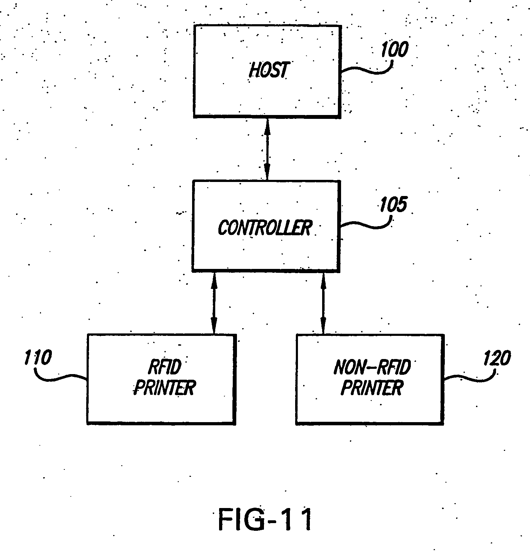

FIGURE 11 is a functional block diagram representing an alternative embodiment of the present invention, wherein a separate controller 105 receives the input data stream from host 100 and selectively directs the input data to either the RFID printer 110 or the non-RFID printer 120. In an illustrative embodiment, the controller 105 is a box having communication ports via which the controller is couplable to RFID printer 110 and non-RFID printer 120. If the controller 105 determines that received data includes RFID data to be encoded to a RFID transponder disposed on a record member, the controller directs that data to the RFID printer 110, which proceeds to encode said RFID data to a RFID transponder disposed on a record member. If said data further includes printing data that is to be printed to the record member associated with the RFID transponder that is encoded, the RFID printer 110 prints such data to the associated record member. If the controller 105 determines that received data does not include RFID data to be encoded to a RFID transponder disposed on a record member, the controller directs that data to the non-RFID printer 120, which proceeds to print a record member in accordance with the received input data. In one embodiment, the controller 105 provides instruction to the RFID printer 110 and the non-RFID printer 120. Said instructions instruct the RFID printer 110 and the non-RFID printer 120 to print sequential numbers on their respective record members in a sequence in which input data is received by the controller. In accordance with these instructions, the RFID printer 110 and the non-RID printer 120 print sequential numbers on their respective record members in the sequence indicated by the controller 105.

In an illustrative embodiment of the present invention, the RFID printer 110 and the non-RFID printer 120 are both capable of printing associating indicia on their respective members. In an illustrative embodiment, these associating indicia associate record members printed by the RFID printer 110 with record members printed by the non-RFID printer 120. In an illustrative embodiment of the present invention, the associating indicia comprise numbers that associate record members printed by the RFID printer 110 with record members printed by the non-RFID printer 120. However, in alternative embodiments, the associating indicia can comprise graphical symbols other than numbers. FIGURE 12 demonstrates this aspect of the present invention. FIGURE 12 shows RFID printer 110 and non-RFID printer 120. RFID printer 110 produces a web 1201 of record members 1203-1218. NON-RAID printer produces a web 1202 of record members 1219-1234. The record members 1203-1218 of the web 1201 produced by the RFID printer 110 have RFID transponders 1240 thereon. For the sake of clarity, the RFID transponders 1240 are only labeled as such for record members 1215 and 1216, but FIGURE 12 shows that the other record members 1203-1214, 1217, 1218 also include RFID transponders. The record members produced by the RFID printer 110 and the non-RFID printer 120 include data 1250 that is printed on the record members by the printers 110 and 120. In FIGURE 12 this data is shown as bar code data, but the printed data 1250 can include any form of data. For the sake of clarity, the bar code data 1250 are only labeled as such for record members 1211 and 1212, but FIGURE 12 shows that the other record members 1203-1210, 1213-1234 also include bar code data.

In many situations, there is a need to associate certain record members that are printed by the RFID printer 110 with certain record members that are printed by the non-RFID printer 120. For example, it may be desired to produce a RFID label that is to be placed on a container or box and to produce non-RFID labels that are to be placed on items that are to be placed in that container or box. Therefore, according to an illustrative embodiment of the present invention, the record members produced by the RFID printer 110 and the non-RFID printer 120 include indicia that associate certain record members printed by the RFID printer 110 with certain record members that are printed by the non-RFID printer 120. In FIGURE 12, the associating indicia are numbers, in particular, sequential numbers shown printed in, for example, the upper right corner of each record member. In FIGURE 12, there are certain sets of record members printed by the RFID printer 110 that include the same data (in this case, the same bar codes). For example, record members 1215, 1216, 1217 and 1218 each have the same bar code printed thereon. These four record members make up a set of record members that is indicated in FIGURE 12 as set 1,1. This set designation refers to the first set of record members produced by the RFID printer 110. Similarly, set 2,1 refers to the second set produced by the RFID printer 110, which set consists solely of record member 1214. Set 3,1 refers to the third set produced by the RFID printer 110 (comprising record members 1212 and 1213), and so on. The RFID printer 110 prints a unique indicium, namely the number 5, on each of the record members 1215-1218 of set 1,1. Similarly, the RFID printer 110 prints a number 6, on the sole record member 1219 of set 2,1. The RFID printer 110 prints a number on each of the record members 1212 and 1213 of set 3,1, and other unique members such as 8, 9 and 10 on other sets through set 6.1, and so on.

The term "related" indicium or indicia can alternatively include series of sequential numbers. For example, Set 1,1 record members could bear indicia 1,2,3 and 4, and Set 1,2 record members could bear the same indicia 1, 2, 3 and 4; Set 2,1 record members could bear the indicium 5, and Set 2,2 record members could bear the indicium 5, and so on. Alternatively, Set 1,1 record members could bear indicia 1, 2, 3 and 4 and set 1,2 record members could bear the indicia 5, 6, 7 and 8; Set 2,1 record members could bear the indicium 9, and Set 2,2 record members could bear the indicia 10, 11, 12; and so on. In any case, the indicia are related in a significant way even though the indicia differ from each other.

In FIGURE 12, each set of record members in the web 1201 printed by the RFID printer 110 that include the same printed data have an associated set of record members that are printed by the non-RFID printer 120 and that include related printed data. According to the present invention, the non-RFID printer 120 prints an indicium on the record members that it produces, associating each record member with its associated record members printed by the RFID printer 110. For example, record members 1231-1234 each have the same bar code printed thereon as the record members 1215-1218 of set 1.1. These four record members 1231-1234 make up a set of record members that is indicated in FIGURE 12 as set 1,2. This set designation refers to the first set of record members produced by the non-RFID printer 120. Similarly, set 2,1 refers to the second set produced by the non-RFID printer 120 (comprising record members 1228-1230), and so on. The non-RFID printer 120 prints the indicium, namely the number 5, on each of the record members 1231-1234 of set 1,2. This number 5 is the same indicium that is printed on the record members 1215-1218 of set 1,1 by the RFID printer 110, since the record members of set 1,1 and 1,2 contain the related, in particular, the same printed data (e.g. bar codes as shown and/or other information). Similarly, the non-RFID printer 120 prints the number 6 on each of the record members 1228-1230 of set 2,2. This number 6 is the same indicium that is printed on the record member 1214 set 2,1 by the RFID printer 110, since the record members of set 2,2 and 2,1 contain the same printed data (e.g. bar codes as shown and/or other information). The non-RFID printer 120 prints a unique indicium such as a number 7 on each of the record members 1225-1227 of set 3,2, and so on.

In an alternative embodiment of the present invention, the RFID printer 110 and non-RFID printer 120 print the associating indicia on only one record member of each set. In one such alternative embodiment, the RFID printer 110 and non-RFID printer 120 print the associating indicia on the first record member of each set. In said embodiment, in FIGURE 12 the RFID printer 110 prints the associating indicia on only record members 1218, 1214, 1213, 1211, 1209 and 1206, and the non-RFID printer prints the associating indicia on only record members 1234, 1230, 1227, 1224, 1222 and 1220. In another alternative embodiment, the associating indicia are printed on only the last record member of each set.

According to the present invention, the above described method and system of printing associating indicia on record members can be employed whether or not data such as bar code data are printed on the record members.

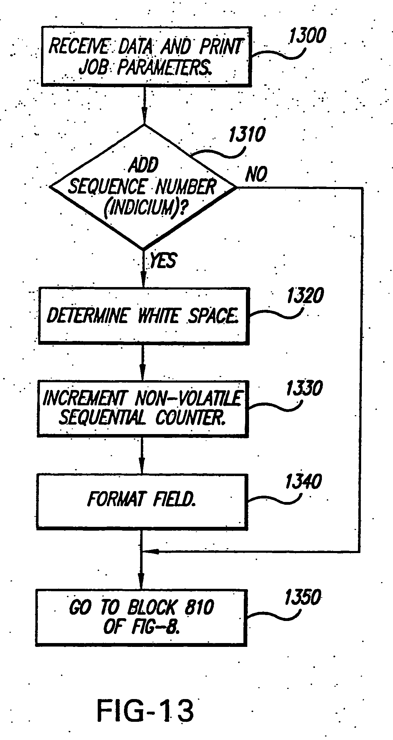

FIGURES 13 is a flowchart representing a method of adding sequence numbers or other associating indicia to record members produced by the RFID printers 110 and the non-RFID printer 120. In an illustrative embodiment of the present invention, the steps shown in FIG. 13 take place between blocks 800 and 810 in FIGURE 8. At step 1300, print data and associated print job parameters are received at a printer, such as RFID printers 110 or non-RFID printer 120. Illustratively, such data is received via input devices such as communication interface 30 or keypad 38. At step 1310, it is determined whether associating indicia are to be added to a record member. If associating data are to be added, at step 1320, the white space is determined. At step 1330, a non-volatile sequential counter is incremented. At step 1340, the field is formatted. From there the printing process proceeds as shown at step 810 of FIGURE 8. At step 1310, if it is determined that no associating indicium is to be added, the printing process proceeds as shown at step 810 of FIGURE 8.

The term "RFID writer" designates hardware and/or software that can at least write data into RFID transponders. A "RFID reader/writer" designates hardware and/or software that can both write data to and read data from RFID transponders. Use of the term "RFID writer" herein does not exclude a RFID reader/writer which has both reading and writing capabilities.

The disclosure includes the following:
If the received data includes RFID data to be written to a RFID transponder and printing data to be printed on an associated record member, a controller controls the RFID writer to write the received RFID data to a RFID transponder disposed on a record member and controls a print head to print the printing data on said record member.

There are first and second printers, and there is a communication port couplable to the second printer, and wherein if the received data does not include RFID data, a controller transmits the received data to the second printer via the communication port.

There are first and second printers, and there is a controller operable to control a print head and to provide instructions to the second printer, such that sequential numbers are printed on record members by the print head and by the second printer in a sequence corresponding to a sequence that data to be printed is received by the controller.

There are first and second printers, wherein a controller is operable to control the first and second printers to print associating indicia on the first and second record members.

The printer includes a print head, wherein the print head is located such that a first web can be advanced into printing cooperation with a first portion of the print head and a second web can be advanced into printing cooperation with a second portion of the print head. The controller is operable to control the print head such that sequential numbers are printed on record members in the first web and record members in the second web in a sequence corresponding to a sequence that data to be printed is received by the controller. Stated differently, the controller is operable to print associating indicia on the record members of the first and second webs.

In or for a system, if data received by a controller includes RFID. data to be written to a RFID transponder and printing data to be printed on the record member of a first web, the controller controls the RFID writer to write the received RFID data to a RFID transponder disposed on a record member of the first web and controls a print head to print the printing data on said record member of the first web.

In or for a system of first and second printers, the first printer comprises a communication port couplable to the second printer and the second printer comprises a communication port couplable to the first printer, and wherein if the received data does not include RFID data, a controller transmits the received data to the communication port of the second printer via the communication port of the first printer.

In or for a system of first and second printers, a controller is operable to control a print head and to provide instructions to the second printer, such that sequential numbers are printed on record members by the print head and by the second printer in a sequence corresponding to a sequence that data to be printed is received by the controller.

In or for a system of first and second printers, a controller is operable to control the first and second printers to print associating indicia on the first and second record members.

In a method, if the received data includes RFID data to be written to a RFID transponder and printing data to be printed on an associated record member, employing a printer to write the received RFID data to a RFID transponder disposed on a record member and to print the printing data on said record member.

In a method, printing with a first printer, and providing instructions to a second printer to print, sequential numbers on record members in a sequence corresponding to a sequence that data to be printed is received by the controller.

In or for a system with first and second printers, a communication port couplable to the second printer, and wherein if the received data does include RFID data, the controller transmits the received data to the second printer via the communication port.

In or for a system with first and second printers, a controller is operable to control a print head, and to provide instructions to the second printer, such that sequential numbers are printed on record members by the print head and by the second printer in a sequence corresponding to a sequence that data to be printed is received by the controller. Stated differently, the controller controls both printers to print associating indica on the record members of the first and second printers.

In or for a system with a first printer with a first print head and a second printer with a second print head, if the data received by a fist controller includes RFID data to be written to a RFID transponder and printing data to be printed on an associated record member, the controller transmits the received data to a second printer and the second controller controls the RFID writer to write the received RFID data to a RFID transponder disposed on a record member of a second web and controls the second print head to print the printing data on said record member of the second web. Stated differently, the first printer further comprises a communication port couplable to the second printer and the second printer comprises a communication port couplable to the first printer, and wherein if the received data does include RFID data, the first controller transmits the received data to the communication port of the second printer via the communication port of the first printer. Stated differently, the first controller is operable to control the first print head, and to provide instructions to the second printer, such that sequential numbers are printed on record members by the first print head and by the second print head in a sequence corresponding to a sequence that data to be printed is received by the first controller.

Many modifications and variations of the present invention are possible in light of the above teachings. Thus, it is to be understood that, within the scope of the appended claims, the invention may be practiced otherwise than as described hereinabove.

## Claims

1. A pair of associated webs (110. 120), comprising:
a first web (110) of record members (1203-1218) having RFID transponders (,1250),
a second web (120) of record members free of RFID transponders,
the record members (1203-1218) of the first web (110) having different data disposed in different sets (1,1-6,1) along the first web (110),
the record members (1219-1234) of the second web (120) having the different data disposed in different sets (1,2-6,2) along the second web (120),
at least two sets of data on the first web (110) being related to data in at least two sets of data on the second web (120) to provide at least two pairs of sets of record members, and
wherein related indicia are printed on at least one record member (1203-1218) of each set (1,1-6.1) on the first web (110) and at least one member of each set (1,2-6,2) on the second web (120) to associate the at least one record member of each set (1,1-6,1) on the first web (110) with the at least one record member of each set (1,2-6,2) of the second web (120) having the related data to pair sets of the related data in the first and second sets (1,1-6.1, 1,2-6,2) to each other, and
wherein there is at least one indicium for each paired set.

2. The pair of associated webs of claim 1, wherein at least one set of the second web. (120) has a plurality of record members (1219-1234) associated with a single record member (1203-1218) of the related set of the first web (110).

3. The pair of associated webs of one of claims 1 and 2, wherein the RFID transponders (1250) are encoded, and
wherein the record members (1219-1234) of the second web are printed record members.

4. The pair of associated webs of any preceding claim, wherein each of the RFID and non-RFID record members (1203-1234) are printed with the related indicium or indicia.

## Patentansprüche

1. Ein Paar zueinandergehöriger Bänder (110, 120), umfassend:
ein erstes Band (110) von Aufzeichnungselementen (1203-1218) mit RFID-Transpondern (1250),
ein zweites Band (120) von Aufzeichnungselementen ohne RFID-Transponder, wobei die Aufzeichnungselemente (1203-1218) des ersten Bands (110) unterschiedliche Daten aufweisen, die in unterschiedlichen Gruppen (1,1-6,1) längs des ersten Bands (110) angeordnet sind,
wobei die Aufzeichnungselemente (1219-1234) des zweiten Bands (120) die unterschiedlichen Daten in unterschiedlichen Gruppen (1,2-6,2) längs des zweiten Bands (120) angeordnet aufweisen,
wobei zumindest zwei Gruppen von Daten des ersten Bands (110) in Bezug zu Daten in mindestens zwei Gruppen von Daten auf dem zweiten Band (120) stehen, um mindestens zwei Paare von Gruppen von Aufzeichnungselementen zu bilden,
und wobei zugehörige Inschriften auf mindestens ein Aufzeichnungselement (1203-1218) jeder Gruppe (1,1-6,1) auf dem ersten Band (110) und mindestens ein Element jeder Gruppe (1,2-6,2) auf dem zweiten Band (120) gedruckt sind, um das mindestens eine Aufzeichnungselement jeder Gruppe (1,1-6,1) auf dem ersten Band (110) dem mindestens einen Aufzeichnungselement jeder Gruppe (1,2-6,2) des zweiten Bands (120) mit den zugehörigen Daten zuzuordnen, um Gruppen der zugehörigen Daten in der ersten und der zweiten Gruppe (1,1-6,1, 1,2-6,2) miteinander zu paaren,
und wobei mindestens eine Inschrift für jede gepaarte Gruppe vorgesehen ist.

2. Das Paar zueinandergehöriger Bänder nach Anspruch 1, wobei mindestens eine Gruppe des zweiten Bands (120) eine Mehrzahl Aufzeichnungselemente (1219-1234) aufweist, die einem einzelnen Aufzeichnungselement (1203-1218) der zugehörigen Gruppe des ersten Bands (110) zugeordnet sind.

3. Das Paar zueinandergehöriger Bänder nach einem der Ansprüche 1 und 2, wobei die RFID-Transponder (1250) codiert sind und wobei die Aufzeichnungselemente (1219-1234) des zweiten Bands gedruckte Aufzeichnungselemente sind.

4. Das Paar zueinandergehöriger Bänder nach einem der vorhergehenden Ansprüche, wobei jedes der RFID- und der RFID-freien Aufzeichnungselemente (1203-1234) mit der zugehörigen Inschrift oder den Inschriften bedruckt ist.

## Revendications

1. Paire de bandes associées (110, 120), comprenant:
une première bande (110) d'éléments d'enregistrement (1203-1218) ayant des transpondeurs RFID (1250),
une deuxième bande (120) d'éléments d'enregistrement dépourvus de transpondeurs RFID,
les éléments d'enregistrement (1203-1218) de la première bande (110) ayant différentes données disposées dans différents ensembles (1,1-6,1) le long de la première bande (110),
les éléments d'enregistrement (1219-1234) de la deuxième bande (120) ayant les différentes données disposées dans différents ensembles (1,2-6,2) le long de la deuxième bande (120),
au moins deux ensembles de données sur la première bande (110) se rapportant à des données dans au moins deux ensembles de données sur la deuxième bande (120) pour fournir au moins deux paires d'ensembles d'éléments d'enregistrement, et
dans laquelle des indices associés sont imprimés sur au moins un élément d'enregistrement (1203-1218) de chaque ensemble (1,1-6,1) sur la première bande (110) et au moins un élément de chaque ensemble (1,2-6,2) sur la deuxième bande (120) pour associer l'au moins un élément d'enregistrement de chaque ensemble (1,1-6,1) sur la première bande (110) avec l'au moins un élément d'enregistrement de chaque ensemble (1,2-6,2) de la deuxième bande (120) ayant les données associées afin d'apparier des ensembles des données associées dans les premier et deuxième ensembles (1,1-6,1, 1,2-6,2) l'un avec l'autre, et
dans laquelle il y a au moins un indice pour chaque ensemble apparié.

2. Paire de bandes associées selon la revendication 1, dans laquelle au moins un ensemble de la deuxième bande (120) a une pluralité d'éléments d'enregistrement (1219-1234) associés avec un élément d'enregistrement (1203-1218) unique de l'ensemble associé de la première bande (110).

3. Paire de bandes associées selon l'une des revendications 1 et 2, dans laquelle les transpondeurs RFID (1250) sont encodés, et
dans laquelle les éléments d'enregistrement (1219-1234) de la deuxième bande sont des éléments d'enregistrement imprimés.

4. Paire de bandes associées selon une quelconque revendication précédente, dans laquelle chacun des éléments d'enregistrement RFID et non RFID (1203-1234) sont imprimés avec l'indice ou les indices associé(s).
